# EUROPEAN PATENT APPLICATION

(11) **EP 4 632 556 A1**
(43) Date of publication of application: **15.10.2025**
(21) Application number: 25168392.6
(22) Date of filing: 03.04.2025
(51) Int. Cl.: G06F 8/30, G06F 8/41, G06F 8/70, G06F 8/33, G06F 8/74

(54) **AI-BASED GENERATION OF A COMPUTER PROGRAM USING COMPILER-GATHERED SEMANTIC INFORMATION ABOUT TARGET CODE**

(30) Priority: 11.04.2024 US 202418633365
(71) Applicant: Microsoft Technology Licensing, LLC, Redmond, WA 98052 (US)
(72) Inventor: TOUB, Stephen Harris, Redmond, 98052 (US); MATOUSEK, Tomas, Redmond, 98052 (US); VASANI, Manish, Redmond, 98052 (US); DUMONT, Mikaela, Redmond, 98052 (US); LU, Gen, Redmond, 98052 (US)
(74) Representative: CMS Cameron McKenna Nabarro Olswang LLP

(57) **Abstract**

Techniques are described herein that are capable of performing AI-based generation of a computer program using compiler-gathered semantic information about target code. A user-generated request that requests information about target code is converted into an AI prompt, which requests that the AI model generate a computer program to determine the information. An AI model is caused to generate the computer program, which comprises configuring the computer program to determine, at runtime of the computer program, the information using semantic information about the target code gathered by a compiler and provided to the computer program by an API, by providing the AI prompt as an input to the AI model. A response to the AI prompt that includes the computer program is received from the AI model. Presentation of a representation of the computer program and/or automatic execution of the computer program against the target code is triggered.

## Description

### BACKGROUND

Developers often include a substantial amount of information in an AI prompt that is to be submitted to an artificial intelligence (AI) model. For instance, the information may include a request for the AI model to achieve a task and contextual information regarding the request (e.g., examples of other requests and the results of those requests). In a coding context (e.g., in a tool like GitHub Copilot^{®} chat), the contextual information may include all of the code deemed relevant to the task. For example, the code that is deemed relevant may include code currently displayed, selected, or otherwise active. In another example, the code that is deemed relevant may include portions of a codebase that are likely relevant based on embeddings. For instance, these portions of the codebase may be determined by indexing source code in the codebase with first embeddings, generating a second embedding from the AI prompt, and finding the first embeddings that are most similar to the second embedding based on one or more criteria.

However, AI models typically limit an amount of contextual information that can be included with a request. Accordingly, it may not be possible to include all relevant contextual information with the request. Also, it may not be possible to find all relevant content using embeddings. Even if all relevant content is capable of being found and provided to the AI model, doing so can incur substantial cost. For instance, as the amount of content that is provided to the AI model increases, a cost associated with the AI model processing the content increases, and an amount of time that is consumed to process the content increases.

### SUMMARY

It may be desirable to cause an artificial intelligence (AI) model to generate a computer program that is capable of determining information about target code in response to a user-generated request for the information. A user-generated request is a request that is generated by a user (e.g., a human). For instance, rather than providing all contextual information that is needed to determine the information (a.k.a. requested information) to the AI model, a reduced amount of information (e.g., merely an AI prompt that articulates the request) may be provided to the AI model to enable the AI model to generate the computer program, and the contextual information may be utilized by the computer program to determine the requested information. In an aspect, the computer program is capable of being executed against any suitable arbitrary code to determine requested information about the arbitrary code. In another aspect, the amount of information consumed by the computer program to determine the requested information is not subject to an input limitation associated with the AI model. For example, the computer program may be capable of analyzing any suitable amount (e.g., all) of the target code to determine the requested information.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

Various approaches are described herein for, among other things, performing AI-based generation of a computer program using compiler-gathered semantic information about target code. In an example approach, a user-generated request that requests information regarding an instance of an attribute in target code is received. The user-generated request is converted into an AI prompt by formatting the user-generated request to have a specified format that enables an AI model to generate a computer program that, when executed, determines the information regarding the instance of the attribute in the target code. The AI model is caused to generate the computer program, which comprises configuring the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. A response to the AI prompt is received from the AI model. The response to the AI prompt includes the computer program. Presentation of a representation of the computer program to a user via a user interface and/or automatic execution of the computer program against the target code is triggered.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURESE

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example AI-based compiler-assisted program generation system in accordance with an embodiment.
FIGS. 2-8 depict flowcharts of example methods for performing AI-based generation of a computer program using compiler-gathered semantic information about target code in accordance with embodiments.
FIG. 9 is a block diagram of an example computing system in accordance with an embodiment.
FIG. 10 is a system diagram of an example mobile device in accordance with an embodiment.
FIG. 11 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to cause an artificial intelligence (AI) model to generate a computer program that is capable of determining information about target code in response to a user-generated request for the information. A user-generated request is a request that is generated by a user (e.g., a human). For instance, rather than providing all contextual information that is needed to determine the information (a.k.a. requested information) to the AI model, a reduced amount of information (e.g., merely an AI prompt that articulates the request) may be provided to the AI model to enable the AI model to generate the computer program, and the contextual information may be utilized by the computer program to determine the requested information. In an aspect, the computer program is capable of being executed against any suitable arbitrary code to determine requested information about the arbitrary code. In another aspect, the amount of information consumed by the computer program to determine the requested information is not subject to an input limitation associated with the AI model. For example, the computer program may be capable of analyzing any suitable amount (e.g., all) of the target code to determine the requested information.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

Example embodiments described herein are capable of performing AI-based generation of a computer program using compiler-gathered semantic information about target code. In an example approach, a user-generated request that requests information regarding an instance of an attribute in target code is received. The user-generated request is converted into an AI prompt by formatting the user-generated request to have a specified format that enables an AI model to generate a computer program that, when executed, determines the information regarding the instance of the attribute in the target code. The AI model is caused to generate the computer program, which comprises configuring the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. A response to the AI prompt is received from the AI model. The response to the AI prompt includes the computer program. Presentation of a representation of the computer program to a user via a user interface and/or automatic execution of the computer program against the target code is triggered.

Example techniques described herein have a variety of benefits as compared to conventional techniques for determining information about code. For instance, the example techniques are capable of causing a more complex search of the code than conventional techniques to determine the information. The search of the code is not limited to utilizing only syntax of the code. The example techniques utilize semantics of the code (e.g., in addition to the syntax) to determine the information. By causing an AI model to generate a computer program to determine the information, the example techniques are capable of determining the information about the code more efficiently, accurately, precisely, and/or reliably than conventional techniques. Causing the AI model to generate the computer program to determine the information may enable the example techniques described herein to be more scalable than the conventional techniques.

By causing an AI model to generate a computer program that, when executed, determines information about target code (e.g., information regarding an instance of an attribute in the target code), the example techniques may increase a user experience of a user (e.g., a developer of the target code, an end user of the target code, or an information technology (IT) professional who is tasked with managing the target code). For instance, by configuring the computer program to determine the information using semantic information about the target code, which is gathered by a compiler at compile time of the target code and which is provided to the computer program by an application programming interface (API) that is available to the computer program at compile time of the computer program, the example techniques may increase the user experience of the user. The user experience of the user may be increased, for example, through the increased efficiency, accuracy, precision, and/or reliability of with which the information about the target code is determined. The example techniques may increase an efficiency of the user by reducing the amount of time that the user otherwise would have consumed to determine the information about the target code.

The example techniques may reduce an amount of time and/or resources (e.g., processor cycles, memory, network bandwidth) that is consumed by a computing system to determine information about target code. For instance, by (1) converting a user-generated request for information about target code into an AI prompt by formatting the user-generated request to have a specified format that enables an AI model to generate a computer program that, when executed, determines the information or (2) causing the AI model to generate the computer program by providing the AI prompt as an input to the AI model or (3) configuring the computer program to determine the information using semantic information about the target code, which is gathered by a compiler at compile time of the target code and which is provided to the computer program by an API that is available to the computer program at compile time of the computer program, the amount of time and resources that otherwise would have been consumed to perform such tasks manually (e.g., based on instructions received from a user) may be avoided. Moreover, performing such tasks enables presentation of a representation of the computer program and/or automatic execution of the computer program against the target code to be triggered automatically. Automating any of the aforementioned tasks may reduce a cost associated with performing the tasks. By reducing the amount of time and/or resources that is consumed by the computing system, the efficiency of the computing system may be increased.

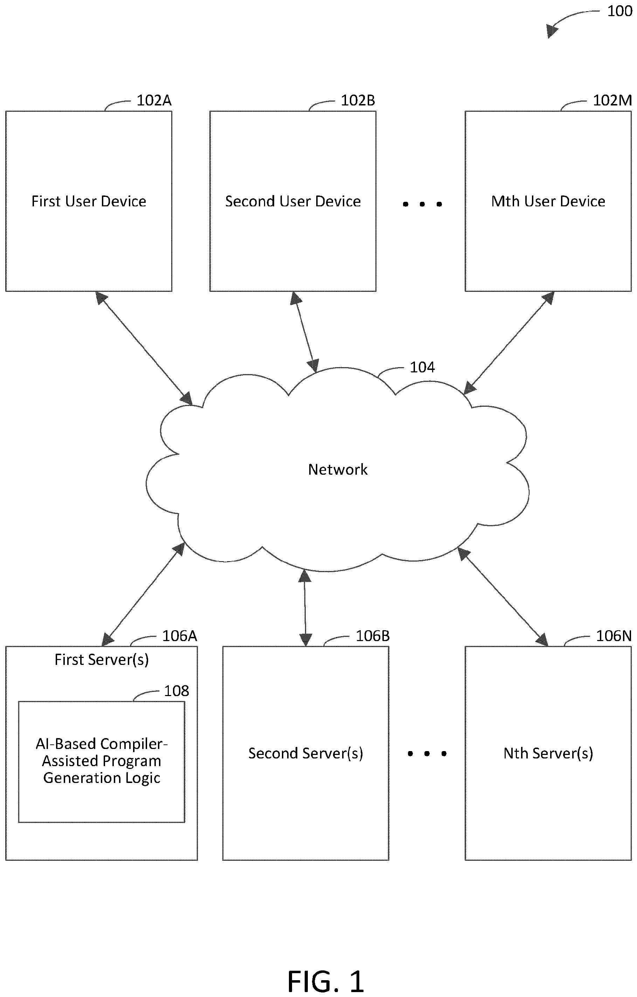

FIG. 1 is a block diagram of an example AI-based compiler-assisted program generation system 100 in accordance with an embodiment. Generally speaking, the AI-based compiler-assisted program generation system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the AI-based compiler-assisted program generation system 100 performing AI-based generation of a computer program using compiler-gathered semantic information about target code. Detail regarding techniques for performing AI-based generation of a computer program using compiler-gathered semantic information about target code is provided in the following discussion.

As shown in FIG. 1, the AI-based compiler-assisted program generation system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the complex expression-based metadata generation system 100.

One example type of computer program that may be executed by one or more of the servers 106A-106N is a developer tool. A developer tool is a computer program that performs diagnostic operations (e.g., identifying source of problem, debugging, profiling, controlling, etc.) with respect to program code. Examples of a developer tool include an integrated development environment (IDE) and a web development platform. Examples of an IDE include Microsoft Visual Studio^{®} IDE, developed and distributed by Microsoft Corporation; AppCode^{®} IDE, PhpStorm^{®} IDE, Rider^{®} IDE, WebStorm^{®} IDE, etc., developed and distributed by JetBrains s.r.o.; JDeveloper^{®} IDE, developed and distributed by Oracle International Corporation; NetBeans^{®} IDE, developed and distributed by Sun Microsystems, Inc.; Eclipse^{™} IDE, developed and distributed by Eclipse Foundation; and Android Studio^{™} IDE, developed and distributed by Google LLC and JetBrains s.r.o. Examples of a web development platform include Windows Azure^{®} platform, developed and distributed by Microsoft Corporation; Amazon Web Services^{®} platform, developed and distributed by Amazon.com, Inc.; Google App Engine^{®} platform, developed and distributed by Google LLC; VMWare^{®} platform, developed and distributed by VMWare, Inc.; and Force.com^{®} platform, developed and distributed by Salesforce, Inc. It will be recognized that the example techniques described herein may be implemented using a developer tool.

Another example type of a computer program that may be executed by one or more of the servers 106A-106N is a cloud computing program (a.k.a. cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include Google Cloud^{®} program, developed and distributed by Google LLC; Oracle Cloud^{®} program, developed and distributed by Oracle Corporation; Amazon Web Services^{®} program, developed and distributed by Amazon.com, Inc.; Salesforce^{®} program, developed and distributed by Salesforce.com, Inc.; AppSource^{®} and Azure^{®} programs, developed and distributed by Microsoft Corporation; GoDaddy^{®} program, developed and distributed by GoDaddy.com LLC; and Rackspace^{®} program, developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include AI-based compiler-assisted program generation logic 108 for illustrative purposes. The AI-based compiler-assisted program generation logic 108 is configured to perform AI-based generation of a computer program using compiler-gathered semantic information about target code. In an example implementation, the AI-based compiler-assisted program generation logic 108 receives a user-generated request that requests information regarding an instance of an attribute in target code. The AI-based compiler-assisted program generation logic 108 converts the user-generated request into an AI prompt by formatting the user-generated request to have a specified format that enables an AI model to generate a computer program that, when executed, determines the information regarding the instance of the attribute in the target code. The AI-based compiler-assisted program generation logic 108 causes the AI model to generate the computer program, which comprises configuring the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. The AI-based compiler-assisted program generation logic 108 receives a response to the AI prompt from the AI model. The response to the AI prompt includes the computer program. The AI-based compiler-assisted program generation logic 108 triggers presentation of a representation of the computer program to a user via a user interface and/or automatic execution of the computer program against the target code.

The AI-based compiler-assisted program generation logic 108 may be implemented in various ways to perform AI-based generation of a computer program using compiler-gathered semantic information about target code, including being implemented in hardware, software, firmware, or any combination thereof. For example, the AI-based compiler-assisted program generation logic 108 may be implemented as computer program code configured to be executed in one or more processors. In another example, at least a portion of the AI-based compiler-assisted program generation logic 108 may be implemented as hardware logic/electrical circuitry. For instance, at least a portion of the AI-based compiler-assisted program generation logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the AI-based compiler-assisted program generation logic 108 may be (or may be included in) a developer tool and/or a cloud computing program, though the scope of the example embodiments is not limited in this respect.

The AI-based compiler-assisted program generation logic 108 is shown to be incorporated in the first server(s) 106A for illustrative purposes and is not intended to be limiting. It will be recognized that the AI-based compiler-assisted program generation logic 108 (or any portion(s) thereof) may be incorporated in any one or more of the servers 106A-106N, any one or more of the user devices 102A-102M, or any combination thereof. For example, client-side aspects of the AI-based compiler-assisted program generation logic 108 may be incorporated in one or more of the user devices 102A-102M, and server-side aspects of AI-based compiler-assisted program generation logic 108 may be incorporated in one or more of the servers 106A-106N.

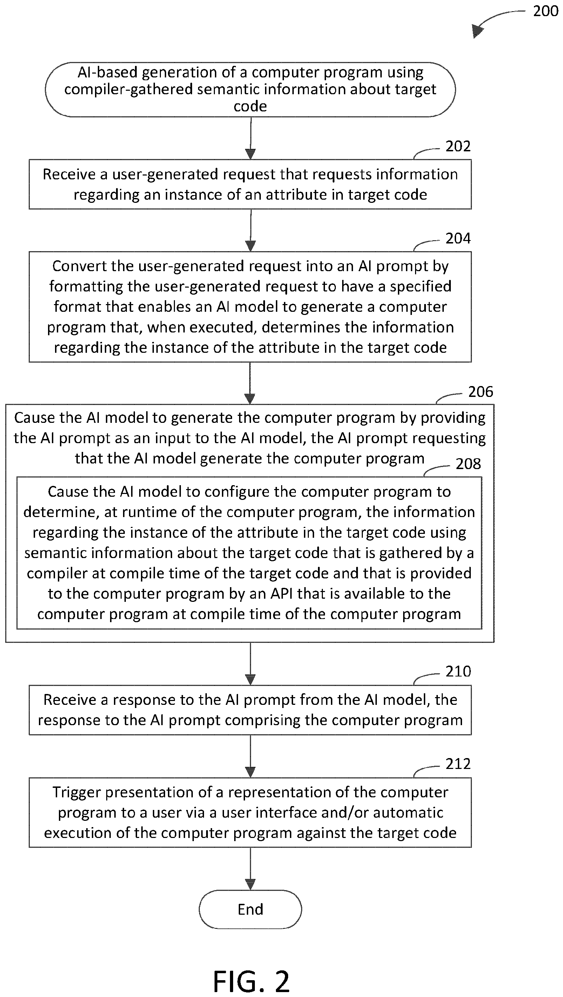

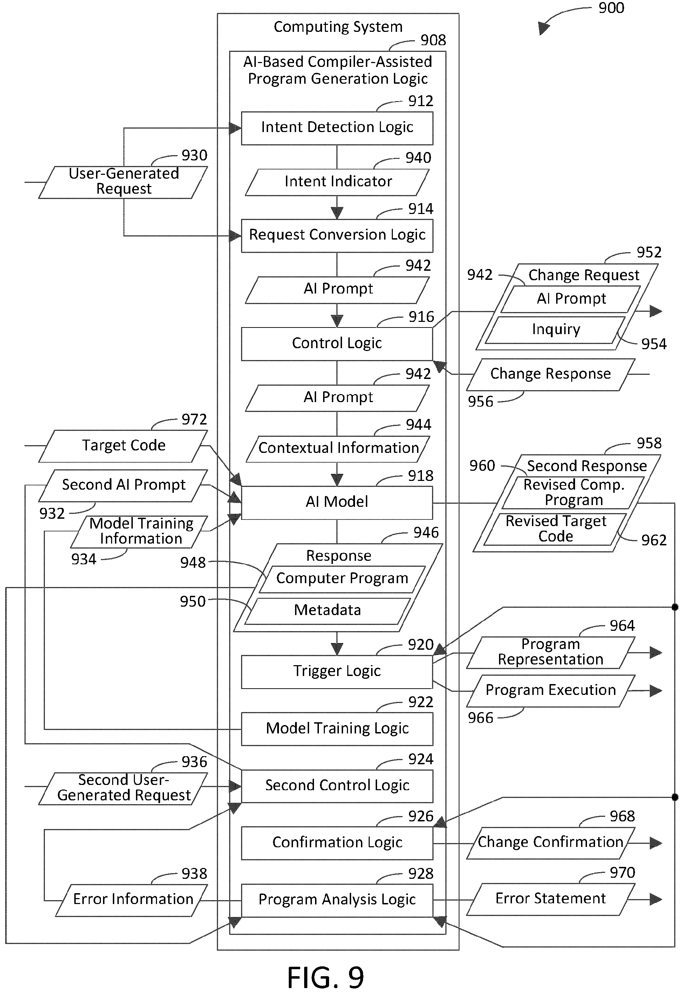

FIGS. 2-8 depict flowcharts 200, 300, 400, 500, 600, 700, and 800 of example methods for performing AI-based generation of a computer program using compiler-gathered semantic information about target code in accordance with embodiments. Flowcharts 200, 300, 400, 500, 600, 700, and 800 may be performed by the first server(s) 106A shown in FIG. 1, for example. For illustrative purposes, flowcharts 200, 300, 400, 500, 600, 700, and 800 are described with respect to a computing system 900 shown in FIG. 9, which is an example implementation of the first server(s) 106A. As shown in FIG. 9, the computing system 900 includes AI-based compiler-assisted program generation logic 908. The AI-based compiler-assisted program generation logic 908 includes intent detection logic 912, request conversion logic 914, control logic 916, an AI model 918, trigger logic 920, model training logic 922, second control logic 924, confirmation logic 926, and program analysis logic 928. Further structural and operational embodiments will be apparent to persons skilled in the relevant art(s) based on the discussion regarding flowcharts 200, 300, 400, 500, 600, 700, and 800.

As shown in FIG. 2, the method of flowchart 200 begins at step 202. In step 202, a user-generated request that requests information regarding an instance of an attribute in target code is received. In a first example, the attribute is exposure of a public method in the target code, and the information indicates a number of public methods in the target code that are exposed and/or identifies each public method in the target code that is exposed. In a second example, the attribute is an error (e.g., a bug) in the target code, and the information indicates a location (e.g., a line number or a subroutine) in the target code at which the error occurs and/or a pattern associated with the error. In a third example, the attribute is a loop in the target code that performs a specified operation, and the information identifies each loop in the target code that perform the specified operation. In a fourth example, the attribute is a type in the target code having formatting (e.g., a name) that does not satisfy a pre-defined formatting rule (e.g., a name of an interface type must start with a capital "I"), and the information identifies each type in the target code having formatting that does not satisfy the pre-defined formatting rule. In a fifth example, the attribute is a method call that specifies (or does not specify) an optional parameter that is taken by a method in the target code, and the information identifies each method call that specifies (or does not specify) an optional parameter that is taken by a method in the target code. The target code may be code under development by a user from which the user-generated request is received, code being accessed by the user (e.g., the user is typing or viewing the code), code in an open window on a machine (e.g., a physical machine or a virtual machine) of the user, code in a window that is selected by the user (e.g., with a mouse, stylus, or finger), code at which a cursor of the user is located, and so on. The target code may be stored on a local machine of the user or in a cloud-based repository (e.g., GitHub) that is coupled to the local machine of the user via a network. In an aspect, the target code is accessible to the general public. For instance, the target code may be open source code. In another aspect, the target code is not accessible to the general public. In an example implementation, the request conversion logic 914 receives a user-generated request 930 that requests information regarding an instance of an attribute in target code 972.

At step 204, the user-generated request is converted into an AI prompt by formatting the user-generated request to have a specified format that enables an AI model to generate a computer program that, when executed, determines the information regarding the instance of the attribute in the target code. In an example implementation, the request conversion logic 914 converts the user-generated request 930 into an AI prompt 942 by formatting the user-generated request 930 to have a specified format that enables the AI model 918 to generate a computer program 948 that, when executed, determines the information regarding the instance of the attribute in the target code 972.

At step 206, the AI model is caused to generate the computer program by providing the AI prompt as an input to the AI model. The AI prompt requests that the AI model generate the computer program. In an aspect, step 206 includes causing the AI model to generate at least a portion (e.g., all) of the computer program in a general-purpose programming language (e.g., C#). In another aspect, step 206 includes causing the AI model to generate at least a portion of the computer program in a domain-specific programming language (e.g., that is capable of being translated into a general-purpose programming language). In an example implementation, the control logic 916 causes the AI model 918 to generate the computer program 948 by providing the AI prompt 942 as an input to the AI model 918. The AI prompt 942 requests that the AI model 918 generate the computer program 948.

Step 206 includes step 208. At step 208, the AI model is caused to configure the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program. The API may be an arbitrary API associated with the compiler. Accordingly, the API need not be selected from a pre-defined set of APIs. In an aspect, the computer program is configured to perform a static analysis of the target code, which includes performing a semantic code search on the target code to identify the information regarding the instance of the attribute. A static analysis of code is an analysis of the code in which the code is not executed. A semantic code search is a search that is performed on code to identify code snippet(s) in the code that correspond to (e.g., satisfy one or more criteria derived from) a natural language query. A natural language query is a query that is written in a natural language. In accordance with this aspect, the AI prompt is a natural language query. Examples of semantic information include but are not limited to the API, a coding style associated with the target code, an indication of keyword(s) in the target code, and an indication of type name(s) in the target code. In an aspect, the AI model is trained on the API prior to the AI prompt being provided to the AI model. In another aspect, the API is included in contextual information (e.g., contextual information 944) that is provided together with the AI prompt to the AI model (e.g., as a result of the AI model not being trained on the API). In an aspect, step 208 includes causing the AI model to configure the computer program to perform a search of the target code to determine the information regarding the instance of the attribute. In another aspect, step 208 includes causing the AI model to configure the computer program to perform a computation on the target code to determine the information regarding the instance of the attribute. In an example embodiment, the computer program expands functionality of the compiler (e.g., beyond functionality that the compiler is initially configured to have), which enables the computer program to determine the information regarding the instance of the attribute in the target code. In an example implementation, the control logic 916 causes the AI model 918 to configure the computer program 948 to determine, at runtime of the computer program 948, the information regarding the instance of the attribute in the target code 972 using semantic information about the target code 972 that is gathered by a compiler at compile time of the target code 972 and that is provided to the computer program 948 by an API that is available to the computer program 948 at compile time of the computer program 948.

In an example embodiment, step 206 includes providing the AI prompt together with contextual information as inputs to the AI model. In an aspect of this embodiment, the contextual information includes the target code. In accordance with this embodiment, the target code includes context regarding the AI prompt. In another aspect of this embodiment, the contextual information includes at least a portion of a definition of the API that is available to the computer program at the compile time of the computer program. For instance, the AI model may not have been trained on the API or the portion of the definition of the API. In accordance with this aspect, the portion of the definition of the API includes context regarding the AI prompt. In yet another aspect of this embodiment, the contextual information includes sample code, which is written in a programming language in which the computer program is to be written. In accordance with this aspect, the sample code includes context regarding the AI prompt. For instance, the AI model may not have been trained on the programming language. In still another aspect of this embodiment, the contextual information includes historical AI prompts that were previously provided as respective inputs to the AI model and that requested that the AI model generate respective computer programs. The contextual information may include any suitable number (e.g., 2, 3, 4, or 5) of historical AI prompts. In accordance with this aspect, the historical AI prompts include context regarding the AI prompt that is provided as an input to the AI model at step 206.

In another example embodiment, the control logic 916 causes the AI model 918 to analyze (e.g., develop and/or refine an understanding of) the AI prompt 942 (e.g., the attribute indicated therein), contextual information 944 (e.g., the target code 972, a definition of the API that is available to the computer program 948 at the compile time of the computer program 948, sample code, historical AI prompts that request generation of computer programs, and the computer programs associated with the historical AI prompts), relationships between any of the foregoing, and confidences in those relationships. For example, the control logic 916 may cause the AI model 918 to compare attributes of the AI prompt 942 and the contextual information 944 using artificial intelligence to generate the computer program.

In an aspect of this embodiment, the control logic 916 performs one or more pre-processing operations on the contextual information 944 (e.g., the target code 972) prior to providing the contextual information 944 to the AI model 918. Examples of a pre-processing operation include but are not limited to removing comma(s), slash(es), and/or white space(s) (e.g., tab(s) and/or redundant blank space(s)) from the contextual information 944. It will be recognized that the control logic 916 need not necessarily provide the contextual information 944 to the AI model 918. For instance, the control logic 916 may provide the AI prompt 942 without the contextual information 944 to the AI model 918 for processing.

In some example embodiments, the AI model 918 includes a neural network that uses the artificial intelligence to determine (e.g., predict) relationships between the AI prompt 942 and the contextual information 944 and confidences in the relationships. The neural network uses those relationships to generate (e.g., derive) the computer program. For example, attributes of the AI prompt 942 and potentially the contextual information 944 (which may include example AI prompt(s) and example computer programs) may be compared to determine similarities and differences between those attributes. In accordance with this example, the neural network may use those similarities and differences to generate the computer program.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the control logic 916 employs a feed forward neural network to train the AI model 918, which is used to determine AI-based confidences. Such AI-based confidences may be used to determine likelihoods that events will occur. In another example embodiment, the model training logic 922 employs a feed forward neural network to train the AI model 918.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on (e.g., based at least on) the context of each portion. For instance, the transformer may be trained (e.g., by the control logic 916 and/or the model training logic 922) to identify the context of each portion using any suitable technique, such as gradient descent.

In an example embodiment, the transformer-based neural network generates a program generation model (e.g., to generate computer programs that, when executed, determine information regarding instance(s) of attribute(s) in target code) by utilizing information, such as AI prompts (e.g., the AI prompt 942), contextual information (e.g., contextual information 944), relationships between any of the foregoing, and AI-based confidences that are derived therefrom.

In example embodiments, the control logic 916 and/or the model training logic 922 includes training logic, and the AI model 918 includes inference logic. The training logic is configured to train an AI algorithm that the inference logic uses to determine (e.g., infer) the AI-based confidences. For instance, the training logic may provide sample AI prompts and sample contextual information (e.g., sample AI prompts and sample computer programs associated with the sample AI prompts) as inputs to the AI algorithm to train the AI algorithm. The sample data may be labeled. The AI algorithm may be configured to derive relationships between the features (e.g., the AI prompt 942 and the contextual information 944) and the resulting AI-based confidences. The inference logic is configured to utilize the AI algorithm, which is trained by the training logic, to determine the AI-based confidence when the features are provided as inputs to the algorithm.

In an example embodiment, the AI model 918 includes (e.g., is) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

In another example embodiment, the AI model 918 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model, developed and distributed by Google LLC.

In yet another example embodiment, the AI model 918 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of an AI prompt, target code, or a computer program that is configured to determine information about target code. The extents to which the vectors are similar may be determined using any suitable similarity determination technique(s). Examples of a similarity determination technique include but are not limited to a cosine similarity technique, a Euclidean distance technique, and a dot product similarity technique.

In still another example embodiment, the AI model 918 includes multiple types of AI models. Weights may be applied to the responses generated by the respective types of AI models. For example, the AI model 918 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI model 918 may combine (e.g., sum) the first weighted response and the second weighted response to generate a response of the AI model 918.

At step 210, a response to the AI prompt is received from the AI model. The response to the AI prompt comprises the computer program. In an example implementation, the trigger logic 920 receives a response 946 to the AI prompt 942 from the AI model 918. The response 946 comprises the computer program 948.

At step 212, presentation of a representation of the computer program to a user (e.g., a user from which the user-generated request is received) via a user interface and/or automatic execution of the computer program against the target code (e.g., against a semantic model of the target code) is triggered. In an aspect, the computer program is automatically executed in a process with rights limited to reading the computer program and the target code. In another aspect, the computer program is automatically executed against a specified portion of the target code (e.g., a specified method, a specified file, or a specified project). Accordingly, the computer program may be automatically executed against the specified portion and not against the rest of the target code. For example, the specified method, file, or project may be a currently active method, file, or project. In another example, the specified method, file, or project may be a method, file, or project having a particular name or following a particular pattern. In an example implementation, the trigger logic 920 triggers presentation of a representation (labeled "program representation 964) of the computer program 948 to a user via a user interface and/or automatic execution (labeled "program execution 966) of the computer program 948 against the target code 972.

In an example embodiment, step 206 includes causing the AI model to generate the computer program and metadata associated with the computer program by providing the AI prompt as the input to the AI model. The metadata includes second information that the computer program uses to determine the information regarding the instance of the attribute in the target code. In an aspect, the metadata includes at least a portion (e.g., all) of the API (e.g., a definition of the API) that is available to the computer program at the compile time of the computer program. In an example implementation, the control logic 916 causes the AI model 918 to generate the computer program 948 and metadata 950 associated with the computer program 948 by providing the AI prompt 942 as the input to the AI model 918. In accordance with this implementation, the metadata 950 includes the second information, which the computer program 948 uses to determine the information regarding the instance of the attribute in the target code 972. In accordance with this embodiment, the response to the AI prompt that is received at step 210 includes the computer program and the metadata. In an example implementation, the response 946 to the AI prompt 942 includes the computer program 948 and the metadata 950, as shown in FIG. 9. It will be recognized that the response 946 need not necessarily include the metadata 950.

In another example embodiment, step 206 includes providing the AI prompt together with contextual information as inputs to the AI model. In accordance with this embodiment, the contextual information includes an initial portion of the computer program. The initial portion of the computer program includes context regarding the AI prompt. For instance, the initial portion of the computer program may include a header of a function that is to be incorporated into the computer program. In an example implementation, the control logic 916 provides the AI prompt 942 together with the contextual information 944 as inputs to the AI model 918. In accordance with this implementation, the contextual information 944 includes an initial portion of the computer program 948. In further accordance with this implementation, the initial portion of the computer program 948 includes context regarding the AI prompt 942. In accordance with this embodiment, the response to the AI prompt that is received at step 210 includes the computer program having the initial portion. In an example implementation, the computer program 948, which is included in the response 946 to the AI prompt 942, includes the initial portion of the computer program 948 from the contextual information 944.

In yet another example embodiment, the user-generated request further requests a change to the target code. In accordance with this embodiment, converting the user-generated request into the AI prompt at step 204 includes formatting the user-generated request to have the specified format that enables the AI model to generate the computer program that, when executed, determines the information regarding the instance of the attribute in the target code and makes the change to the target code. In further accordance with this embodiment, causing the AI model to configure the computer program at step 208 includes causing the AI model to configure the computer program to determine, at the runtime of the computer program, the information regarding the instance of the attribute in the target code using the semantic information about the target code that is gathered by the compiler at the compile time of the target code and that is provided to the computer program by the API that is available to the computer program at the compile time of the computer program and to further configure the computer program to make the change to the target code.

In some example embodiments, one or more steps 202, 204, 206, 208, 210, and/or 212 of flowchart 200 may not be performed. Moreover, steps in addition to or in lieu of steps 202, 204, 206, 208, 210, and/or 212 may be performed. For instance, in an example embodiment, the method of flowchart 200 further includes detecting an intent of the user from whom the user-generated request is received. The intent indicates that the user intends to use artificial intelligence to perform an action on the target code and/or to obtain the information regarding the instance of the attribute in the target code. In an example implementation, the intent detection logic 912 detects the intent of the user from whom the user-generated request 930 is received. In accordance with this implementation, the intent indicates that the user intends to use artificial intelligence to perform an action on the target code 972 and/or to obtain the information regarding the instance of the attribute in the target code 972. The intent detection logic 912 generates an intent indicator 940, which indicates (e.g., specifies or describes) the intent of the user. In accordance with this embodiment, converting the user-generated request into the AI prompt at step 204 is performed based at least on (e.g., as a result of or in response to) the intent of the user indicating that the user intends to use artificial intelligence to perform the action on the target code and/or to obtain the information regarding the instance of the attribute in the target code. In an example implementation, the request conversion logic 914 converts the user-generated request 930 into the AI prompt 942 based at least on the intent indicator 940 indicating that the user intends to use artificial intelligence to perform an action on the target code 972 and/or to obtain the information regarding the instance of the attribute in the target code 972. For instance, the intent indicator 940 may indicate that the user intends to use artificial intelligence, rather than a substring search or a regular expression search, to perform the action and/or to obtain the information.

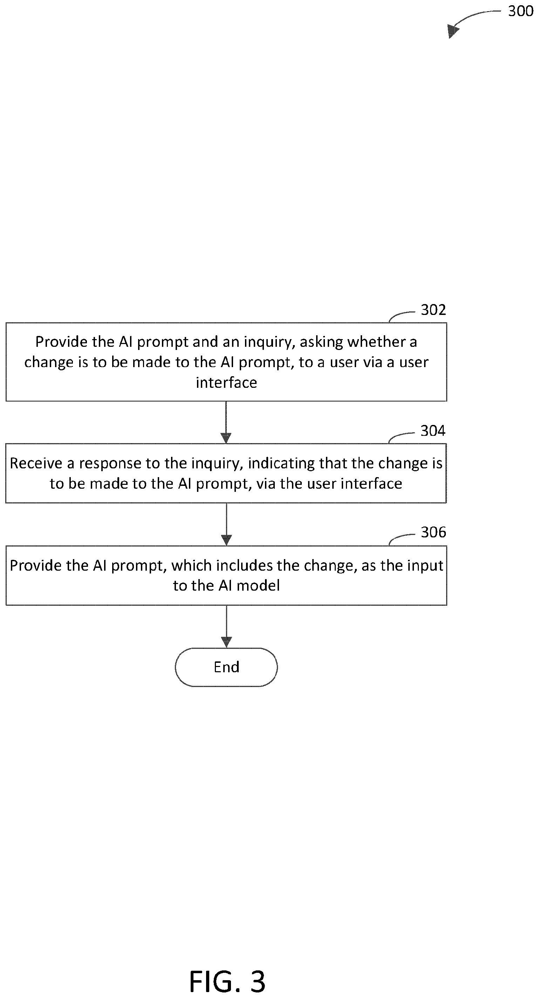

In another example embodiment, the method of flowchart 200 includes one or more of the steps shown in flowchart 300 of FIG. 3. As shown in FIG. 3, the method of flowchart 300 begins at step 302. In step 302, the AI prompt and an inquiry, asking whether a change is to be made to the AI prompt, are provided to a user via a user interface. In an example implementation, the control logic provides a change request 952, which includes the AI prompt 942 and an inquiry 954, which inquires whether a change is to be made to the AI prompt 942, to the user via the user interface.

At step 304, a response to the inquiry, indicating that the change is to be made to the AI prompt, is received via the user interface. In an example implementation, the control logic 916 receives a change response 956 via the user interface in response to the inquiry 954. The change response 956 indicates that the change is to be made to the AI prompt 942.

At step 306, the AI prompt, which includes the change, is provided as the input to the AI model. In an example implementation, the control logic 916 provides the AI prompt 942, which incorporates the change, as the input to the AI model 918. In an aspect, step 306 is included in step 206 shown in FIG. 2.

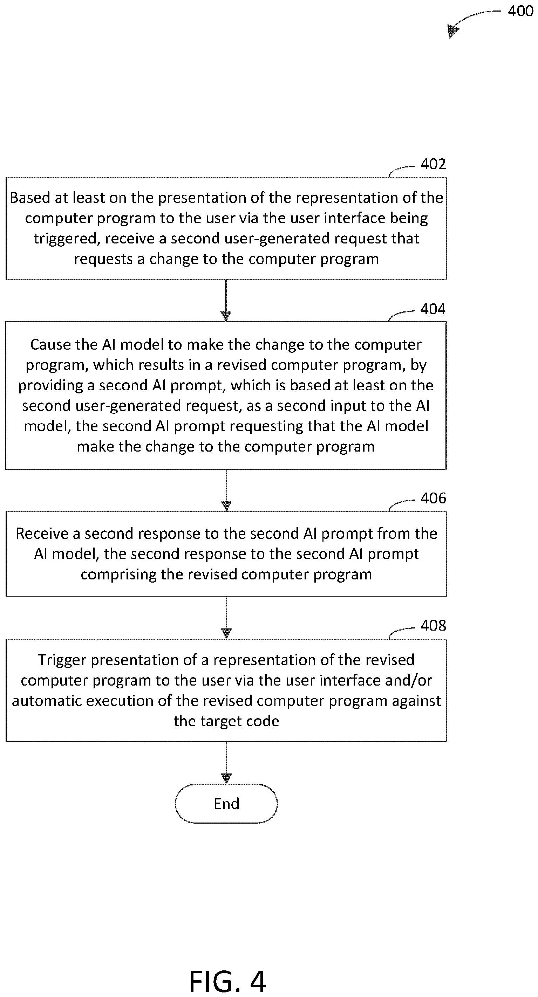

In another example embodiment, the method of flowchart 200 further includes one or more of the steps shown in flowchart 400 of FIG. 4. In accordance with this embodiment, the presentation of the representation of the computer program to the user via the user interface is triggered at step 212. As shown in FIG. 4, the method of flowchart 400 begins at step 402. In step 402, based at least on the presentation of the representation of the computer program to the user via the user interface being triggered, a second user-generated request that requests a change to the computer program is received. In an example implementation, based at least on the presentation of the representation of the computer program to the user via the user interface being triggered, the second control logic 924 receives a second user-generated request 936 that requests a change to the computer program 948.

At step 404, the AI model is caused to make the change to the computer program, which results in a revised computer program, by providing a second AI prompt, which is based at least on the second user-generated request, as a second input to the AI model. The second AI prompt requests that the AI model make the change to the computer program. In an example implementation, the second control logic 924 causes the AI model 918to make the change to the computer program 948, which results in a revised computer program 960, by providing a second AI prompt 932, which is based at least on the second user-generated request 936, as a second input to the AI model 918. The second AI prompt 932 requests that the AI model 918 make the change to the computer program 948.

At step 406, a second response to the second AI prompt is received from the AI model. The second response to the second AI prompt includes the revised computer program. In an example implementation, the trigger logic 920 receives a second response 958 to the second AI prompt 932 from the AI model 918. In accordance with this implementation, the second response 958 to the second AI prompt 932 includes the revised computer program 960.

At step 408, presentation of a representation of the revised computer program to the user via the user interface and/or automatic execution of the revised computer program against the target code is triggered. In an example implementation, the trigger logic 920 triggers presentation of a representation of the revised computer program 960 to the user via the user interface and/or automatic execution of the revised computer program 960 against the target code 972. For instance, the trigger logic 920 may configure the program representation 964 to include (e.g., be) the representation of the revised computer program 960. In another example, the trigger logic 920 may trigger the program execution 966 to include (e.g., be) an automatic execution of the revised computer program 960 against the target code 972.

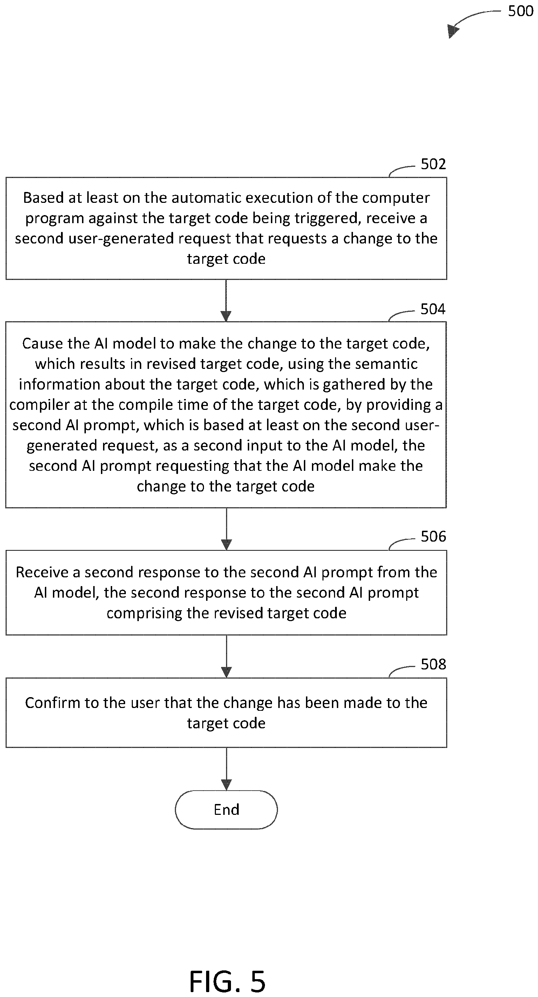

In yet another example embodiment, the method of flowchart 200 further includes one or more of the steps shown in flowchart 500 of FIG. 5. In accordance with this embodiment, the automatic execution of the computer program against the target code is triggered at step 212. As shown in FIG. 5, the method of flowchart 500 begins at step 502. In step 502, based at least on the automatic execution of the computer program against the target code being triggered, a second user-generated request that requests a change to the target code is received. In an example implementation, based at least on the automatic execution of the computer program 948 against the target code 972 being triggered, the second control logic 924 receives a second user-generated request 936 that requests a change to the target code 972.

At step 504, the AI model is caused to make the change to the target code, which results in revised target code, using the semantic information about the target code, which is gathered by the compiler at the compile time of the target code, by providing a second AI prompt, which is based at least on the second user-generated request, as a second input to the AI model. The second AI prompt requests that the AI model make the change to the target code. For instance, the semantic information may indicate a coding style associated with the target code, use of keywords in the target code, and/or use of type names in the target code. In an aspect, the AI model is caused to replace a first code snippet in the target code with a second code snippet to provide the revised target code. For example, the AI model may be caused to replace a first variable name of a variable in the target code with a second variable name to provide the revised target code. In another example, the AI model may be caused to replace a first function name of a function in the target code with a second function name to provide the revised target code. In yet another example, the AI model may be caused to convert code snippet(s) in the target code from a first form to a second form to provide the revised target code. For instance, the AI model may be caused to make all public methods in the target code internal. In another aspect, the AI model is caused to delete a code snippet from the target code to provide the revised target code. In yet another aspect, the AI model is caused to add a code snippet to the target code to provide the revised target code. The change in the target code may be made directly in text of the target code or via an object model representation of the target code. In an example implementation, the second control logic 924 causes the AI model 918 to make the change to the target code 972, which results in revised target code 962, using the semantic information about the target code 972, which is gathered by the compiler at the compile time of the target code 972, by providing a second AI prompt 932, which is based at least on the second user-generated request 936, as a second input to the AI model 918. The second AI prompt 932 requests that the AI model 918 make the change to the target code 972.

At step 506, a second response to the second AI prompt is received from the AI model. The second response to the second AI prompt includes the revised target code. In an example implementation, the confirmation logic 926 receives a second response 958 to the second AI prompt 932 from the AI model 918. In accordance with this implementation, the second response 958 to the second AI prompt 932 includes the revised target code 962.

At step 508, a confirmation that the change has been made to the target code is provided to the user. In an example implementation, the confirmation logic 926 provides a change confirmation 968, which confirms that the change has been made to the target code, to the user.

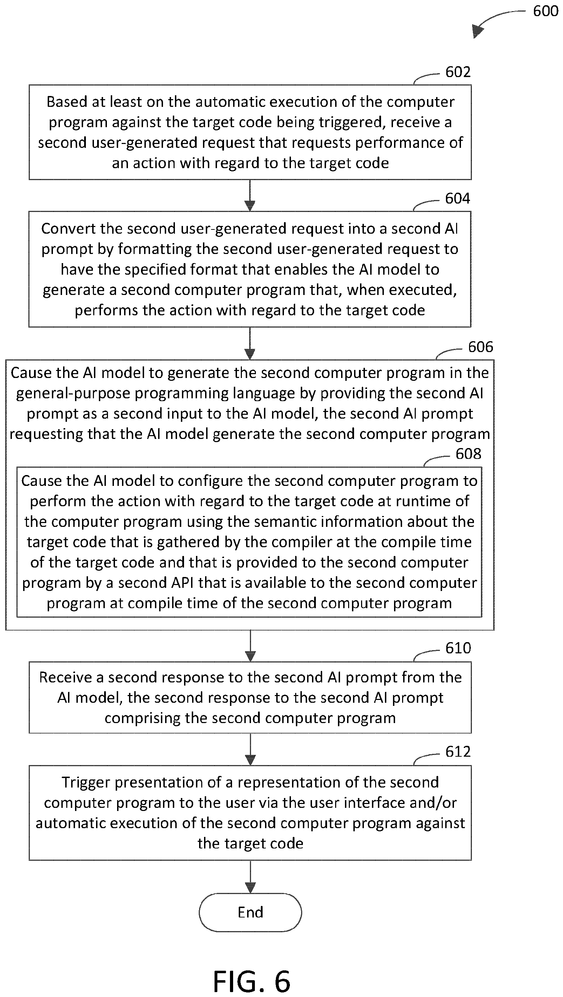

In still another example embodiment, the method of flowchart 200 further includes one or more of the steps shown in flowchart 600 of FIG. 6. In accordance with this embodiment, the automatic execution of the computer program against the target code is triggered at step 212. As shown in FIG. 6, the method of flowchart 600 begins at step 602. In step 602, based at least on the automatic execution of the computer program against the target code being triggered, a second user-generated request that requests performance of an action with regard to the target code is received. In an example implementation, based at least on the automatic execution of the computer program 948 against the target code 972 being triggered, the second control logic 924 receives a second user-generated request 936 that requests performance of an action with regard to the target code 972.

At step 604, the second user-generated request is converted into a second AI prompt by formatting the second user-generated request to have the specified format that enables the AI model to generate a second computer program that, when executed, performs the action with regard to the target code. In an example implementation, the second control logic 924 converts the second user-generated request 936 into a second AI prompt 932 by formatting the second user-generated request 936 to have the specified format that enables the AI model 918 to generate a second computer program that, when executed, performs the action with regard to the target code 972.

At step 606, the AI model is caused to generate the second computer program by providing the second AI prompt as a second input to the AI model. The second AI prompt requests that the AI model generate the second computer program. In an aspect, the AI model is caused to generate the second computer program at least partially (e.g., entirely) in a general-purpose programming language. In another aspect, the AI model is caused to generate the second computer program at least partially (e.g., entirely) in a domain-specific programming language. In an example implementation, the second control logic 924 causes the AI model 918 to generate the second computer program by providing the second AI prompt 932 as a second input to the AI model 918. In accordance with this implementation, the second AI prompt 932 requests that the AI model 918 generate the second computer program.

Step 606 includes step 608. At step 608, the AI model is caused to configure the second computer program to perform the action with regard to the target code at runtime of the computer program using the semantic information about the target code that is gathered by the compiler at the compile time of the target code and that is provided to the second computer program by a second API that is available to the second computer program at compile time of the second computer program. In an aspect the API and the second API are same. In another aspect, the API and the second API are different. In an example implementation, the second control logic 924 causes the AI model 918 to configure the second computer program to perform the action with regard to the target code 972 at runtime of the computer program 948 using the semantic information about the target code 972 that is gathered by the compiler at the compile time of the target code 972 and that is provided to the second computer program by a second API that is available to the second computer program at compile time of the second computer program.

At step 610, a second response to the second AI prompt is received from the AI model. The second response to the second AI prompt includes the second computer program. In an example implementation, the trigger logic 920 receives a second response 958 in response to the second AI prompt 932 from the AI model 918. The second response 958 to the second AI prompt 932 includes the second computer program.

At step 612, presentation of a representation of the second computer program to the user via the user interface and/or automatic execution of the second computer program against the target code is triggered. In an example implementation, the trigger logic 920 triggers presentation of a representation of the second computer program to the user via the user interface and/or automatic execution of the second computer program against the target code.

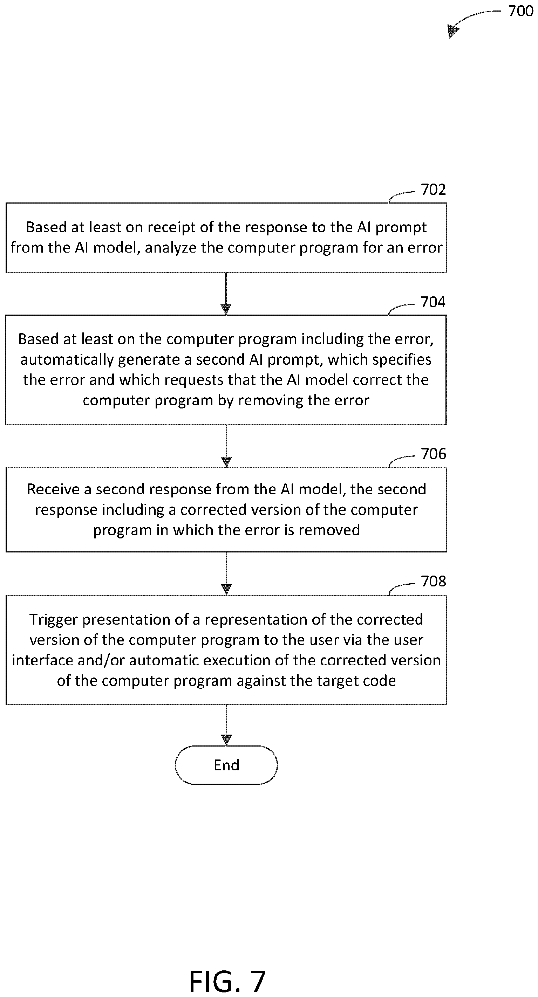

In another example embodiment, the method of flowchart 200 includes one or more of the steps shown in flowchart 700 of FIG. 7. As shown in FIG. 7, the method of flowchart 700 begins at step 702. In step 702, based at least on receipt of the response to the AI prompt from the AI model, the computer program is analyzed for an error. In an example implementation, based at least on receipt of the response 946 to the AI prompt 942 from the AI model 918, the program analysis logic 928 analyzes the computer program 948 for the error. For instance, the program analysis logic 928 may extract the computer program 948 from the response 946 for analysis. The program analysis logic 928 generates error information 938, which indicates whether the computer program 948 includes the error.

At step 704, based at least on the computer program including the error, automatically generating a second AI prompt, which specifies the error and which requests that the AI model correct the computer program by removing the error. In an example implementation, based at least on the computer program 948 including the error, the second control logic 924 automatically generates a second AI prompt 932, which specifies the error and which requests that the AI model 918 correct the computer program 948 by removing the error. For instance, the second control logic 924 may automatically generate the second AI prompt 932 based at least on the error information 938 indicating that the computer program 948 includes the error.

At step 706, a second response from the AI model is received. The second response includes a corrected version of the computer program in which the error is removed. In an example implementation, the trigger logic 920 receives a second response 958 from the AI model 918. The second response 958 includes a revised computer program 960, which is a corrected version of the computer program 948 in which the error is removed.

At step 708, presentation of a representation of the corrected version of the computer program to the user via the user interface and/or automatic execution of the corrected version of the computer program against the target code is triggered. In an example implementation, the trigger logic 920 triggers presentation of a representation of the revised computer program 960 to the user via the user interface and/or automatic execution of the revised computer program 960 against the target code 972. In an aspect, step 708 is included in step 212 shown in FIG. 2.

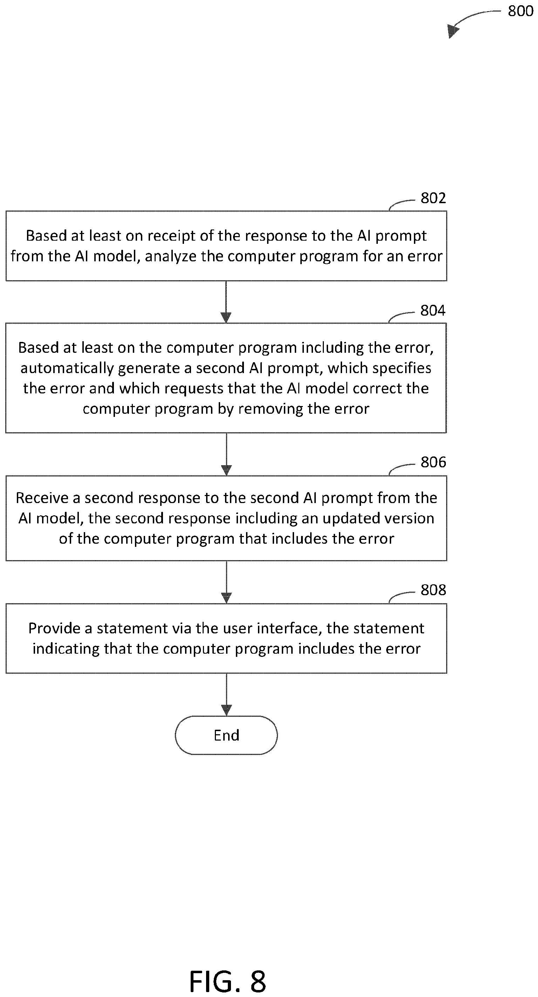

In another example embodiment, the method of flowchart 200 further includes one or more of the steps shown in flowchart 800 of FIG. 8. As shown in FIG. 8, the method of flowchart 800 begins at step 802. In step 802, based at least on receipt of the response to the AI prompt from the AI model, the computer program is analyzed for an error. In an example implementation, based at least on receipt of the response 946 to the AI prompt 942 from the AI model 918, the program analysis logic 928 analyzes the computer program 948 for the error. The program analysis logic 928 generates error information 938, which indicates whether the computer program 948 includes the error.

At step 804, based at least on the computer program including the error, automatically generating a second AI prompt, which specifies the error and which requests that the AI model correct the computer program by removing the error. In an example implementation, based at least on the computer program 948 including the error, the second control logic 924 automatically generates a second AI prompt 932, which specifies the error and which requests that the AI model 918 correct the computer program 948 by removing the error. For instance, the second control logic 924 may automatically generate the second AI prompt 932 based at least on the error information 938 indicating that the computer program 948 includes the error.

At step 806, a second response to the second AI prompt is received from the AI model. The second response includes an updated version of the computer program that includes the error. In an aspect, step 212 shown in FIG. 2 is performed in response to receipt of the second response from the AI model. In accordance with this aspect, the computer program of which a representation is presented to the user and/or automatically executed at step 212 may be a version that is included in the response to the AI prompt that is received at step 210 or the updated version that is included in the second response to the second AI prompt that is received at step 806. In an example implementation, the program analysis logic 928 receives a second response 958 to the second AI prompt 932 from the AI model 918. In accordance with this implementation, the second response 958 includes an updated version of the computer program that includes the error. In further accordance with this implementation, triggering the presentation of the representation of the computer program 948 or the automatic execution of the computer program 948 is performed in response to receipt of the second response 958 from the AI model 918.

At step 808, a statement is provided via the user interface. The statement indicates that the computer program (e.g., the updated version of the computer program) includes the error. In an example implementation, the program analysis logic 928 provides an error statement 970 via the user interface. The error statement 970 indicates that the computer program 948 includes the error.

It will be recognized that the computing system 900 may not include one or more of the AI-based compiler-assisted program generation logic 908, the intent detection logic 912, the request conversion logic 914, the control logic 916, the AI model 918, the trigger logic 920, the model training logic 922, the second control logic 924, the confirmation logic 926, and/or the program analysis logic 928. Furthermore, the computing system 900 may include components in addition to or in lieu of the AI-based compiler-assisted program generation logic 908, the intent detection logic 912, the request conversion logic 914, the control logic 916, the AI model 918, the trigger logic 920, the model training logic 922, the second control logic 924, the confirmation logic 926, and/or the program analysis logic 928.

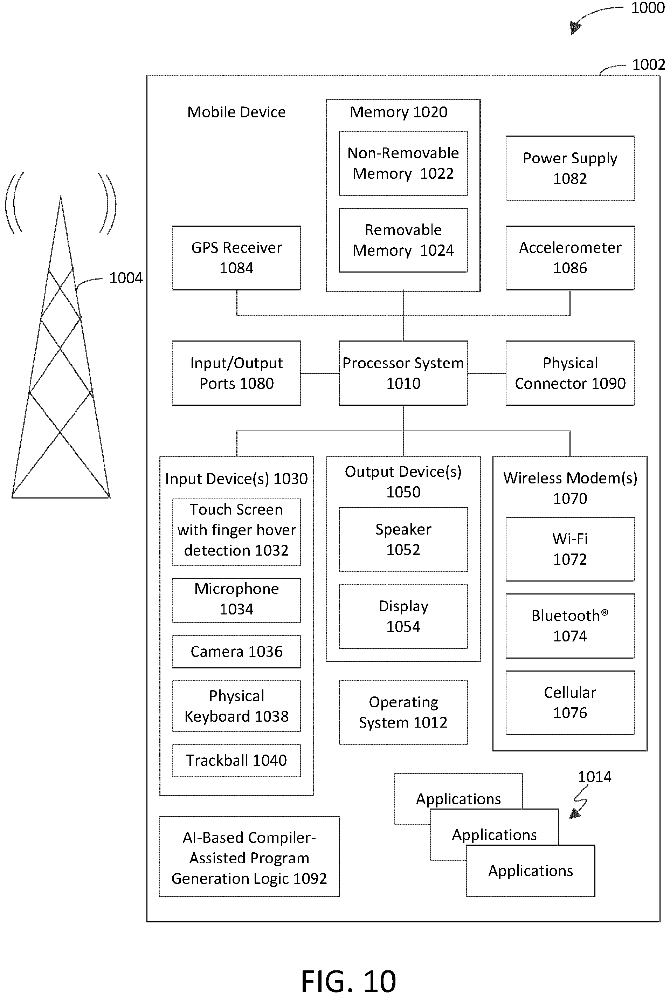

FIG. 10 is a system diagram of an example mobile device 1000 including a variety of optional hardware and software components, shown generally as 1002. Any components 1002 in the mobile device may communicate with any other component, though not all connections are shown, for ease of illustration. The mobile device 1000 may be any of a variety of computing devices (e.g., cell phone, smartphone, handheld computer, Personal Digital Assistant (PDA), etc.) and may allow wireless two-way communications with one or more mobile communications networks 1004, such as a cellular or satellite network, or with a local area or wide area network.

The mobile device 1000 includes a processor system 1010 (e.g., signal processor, microprocessor, ASIC, or other control and processing logic circuitry) for performing such tasks as signal coding, data processing, input/output processing, power control, and/or other functions. An operating system 1012 may control the allocation and usage of the components 1002 and support for one or more applications 1014 (a.k.a. application programs). The applications 1014 may include common mobile computing applications (e.g., email applications, calendars, contact managers, web browsers, messaging applications) and any other computing applications (e.g., word processing applications, mapping applications, media player applications).

The mobile device 1000 includes AI-based compiler-assisted program generation logic 1092, which is operable in a manner similar to the AI-based compiler-assisted program generation logic 108 described above with reference to FIG. 1 and/or the AI-based compiler-assisted program generation logic 908 described above with reference to FIG. 9.

The mobile device 1000 includes memory 1020. The memory 1020 may include non-removable memory 1022 and/or removable memory 1024. The non-removable memory 1022 may include random access memory (RAM), read-only memory (ROM), flash memory, a hard disk, or other well-known memory storage technologies. The removable memory 1024 may include flash memory or a Subscriber Identity Module (SIM) card, which is well known in Global System for Mobile Communications (GSM) systems, or other well-known memory storage technologies, such as "smart cards." The memory 1020 may store data and/or code for running the operating system 1012 and the applications 1014. Example data may include web pages, text, images, sound files, video data, or other data sets to be sent to and/or received from one or more network servers or other devices via one or more wired or wireless networks. Memory 1020 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 1000 may support one or more input devices 1030, such as a touch screen 1032, microphone 1034, camera 1036, physical keyboard 1038 and/or trackball 1040 and one or more output devices 1050, such as a speaker 1052 and a display 1054. Touch screens, such as the touch screen 1032, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 1032 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 1032 and display 1054 may be combined in a single input/output device. The input devices 1030 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (e.g., electroencephalography (EEG) and related methods). Thus, in one specific example, the operating system 1012 or applications 1014 may include speech-recognition software as part of a voice control interface that allows a user to operate the mobile device 1000 via voice commands. Furthermore, the mobile device 1000 may include input devices and software that allows for user interaction via a user's spatial gestures, such as detecting and interpreting gestures to provide input to a gaming application.

Wireless modem(s) 1070 may be coupled to antenna(s) (not shown) and may support two-way communications between the processor system 1010 and external devices, as is well understood in the art. The modem(s) 1070 are shown generically and may include a cellular modem 1076 for communicating with the mobile communication network 1004 and/or other radio-based modems (e.g., Bluetooth^{®} 1074 and/or Wi-Fi 1072). At least one of the wireless modem(s) 1070 is typically configured for communication with one or more cellular networks, such as a GSM network for data and voice communications within a single cellular network, between cellular networks, or between the mobile device and a public switched telephone network (PSTN).

The mobile device 1000 may further include at least one input/output port 1080, a power supply 1082, a satellite navigation system receiver 1084, such as a Global Positioning System (GPS) receiver, an accelerometer 1086, and/or a physical connector 1090, which may be a universal serial bus (USB) port, IEEE 1394 (FireWire) port, and/or RS-232 port. The illustrated components 1002 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the AI-based compiler-assisted program generation logic 108, the AI-based compiler-assisted program generation logic 908, the intent detection logic 912, the request conversion logic 914, the control logic 916, the AI model 918, the trigger logic 920, the model training logic 922, the second control logic 924, the confirmation logic 926, the program analysis logic 928, flowchart 200, flowchart 300, flowchart 400, flowchart 500, flowchart 600, flowchart 700, and/or flowchart 800 may be implemented in hardware, software, firmware, or any combination thereof.

For example, any one or more of the AI-based compiler-assisted program generation logic 108, the AI-based compiler-assisted program generation logic 908, the intent detection logic 912, the request conversion logic 914, the control logic 916, the AI model 918, the trigger logic 920, the model training logic 922, the second control logic 924, the confirmation logic 926, the program analysis logic 928, flowchart 200, flowchart 300, flowchart 400, flowchart 500, flowchart 600, flowchart 700, and/or flowchart 800 may be implemented, at least in part, as computer program code configured to be executed in one or more processors.

In another example, any one or more of the AI-based compiler-assisted program generation logic 108, the AI-based compiler-assisted program generation logic 908, the intent detection logic 912, the request conversion logic 914, the control logic 916, the AI model 918, the trigger logic 920, the model training logic 922, the second control logic 924, the confirmation logic 926, the program analysis logic 928, flowchart 200, flowchart 300, flowchart 400, flowchart 500, flowchart 600, flowchart 700, and/or flowchart 800 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

Techniques are described herein that are capable of performing AI-based generation of a computer program using compiler-gathered semantic information about target code. A user-generated request that requests information about target code is converted into an AI prompt, which requests that the AI model generate a computer program to determine the information. An AI model is caused to generate the computer program, which comprises configuring the computer program to determine, at runtime of the computer program, the information using semantic information about the target code gathered by a compiler and provided to the computer program by an API, by providing the AI prompt as an input to the AI model. A response to the AI prompt that includes the computer program is received from the AI model. Presentation of a representation of the computer program and/or automatic execution of the computer program against the target code is triggered.

(A1) An example system (Figure 1, 102A-102M, 106A-106N; Figure 9, 900; Figure 10, 1002; Figure 11, 1100) comprises a processor system (Figure 10, 1010; Figure 11, 1102) and a memory (Figure 10, 1020, 1022, 1024; Figure 11, 1104, 1108, 1110) that stores computer-executable instructions. The computer-executable instructions are executable by the processor system to at least receive (Figure 2, 202) a user-generated request (Figure 9, 930) that requests information regarding an instance of an attribute in target code (Figure 9, 972). The computer-executable instructions are executable by the processor system further to at least convert (Figure 2, 204) the user-generated request into an AI prompt (Figure 9, 942) by formatting the user-generated request to have a specified format that enables an AI model (Figure 9, 918) to generate a computer program (Figure 9, 948) that, when executed, determines the information regarding the instance of the attribute in the target code. The computer-executable instructions are executable by the processor system further to at least cause (Figure 2, 206) the AI model to generate the computer program, which comprises configuring (Figure 2, 208) the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. The computer-executable instructions are executable by the processor system further to at least receive (Figure 2, 210) a response (Figure 9, 946) to the AI prompt from the AI model. The response to the AI prompt comprises the computer program. The computer-executable instructions are executable by the processor system further to at least trigger (Figure 2, 212) at least one of the following: presentation of a representation (Figure 9, 964) of the computer program to a user via a user interface; automatic execution (Figure 9, 966) of the computer program against the target code.

(A2) In the example system of A1, wherein the computer-executable instructions are executable by the processor system to at least: increase efficiency of the computing system by triggering the automatic execution of the computer program against the target code.

(A3) In the example system of any of A1-A2, wherein the computer-executable instructions are executable by the processor system to at least: reduce an amount of resources consumed by the computing system to determine the information regarding the instance of the attribute in the target code by triggering the automatic execution of the computer program against the target code.

(A4) In the example system of any of A1-A3, wherein the computer-executable instructions are executable by the processor system to at least: cause the AI model to generate at least a portion of the computer program in a general-purpose programming language.

(A5) In the example system of any of A1-A4, wherein the computer-executable instructions are executable by the processor system to at least: cause the AI model to generate at least a portion of the computer program in a domain-specific programming language.

(A6) In the example system of any of A1-A5, wherein the computer-executable instructions are executable by the processor system to at least: cause the AI model to generate the computer program and metadata associated with the computer program by providing the AI prompt as the input to the AI model, the metadata including second information that the computer program uses to determine the information regarding the instance of the attribute in the target code; and wherein the response to the AI prompt comprises the computer program and the metadata.

(A7) In the example system of any of A1-A6, wherein the computer-executable instructions are executable by the processor system to at least: provide the AI prompt and an inquiry, asking whether a change is to be made to the AI prompt, to a user via a user interface; receive a response to the inquiry, indicating that the change is to be made to the AI prompt, via the user interface; and cause the AI model to generate the computer program by providing the AI prompt, which includes the change, as the input to the AI model.

(A8) In the example system of any of A1-A7, wherein the computer-executable instructions are executable by the processor system to at least: cause the AI model to generate the computer program by providing the AI prompt together with contextual information as inputs to the AI model, the contextual information comprising at least a portion of a definition of the API that is available to the computer program at the compile time of the computer program, wherein the portion of the definition of the API comprises context regarding the AI prompt.

(A9) In the example system of any of A1-A8, wherein the computer-executable instructions are executable by the processor system to at least: cause the AI model to generate the computer program by providing the AI prompt together with contextual information as inputs to the AI model, the contextual information comprising sample code, which is written in a programming language in which the computer program is to be written, wherein the sample code comprises context regarding the AI prompt.

(A10) In the example system of any of A1-A9, wherein the computer-executable instructions are executable by the processor system to at least: trigger the presentation of the representation of the computer program to the user via the user interface; after the presentation of the representation of the computer program to the user via the user interface is triggered, receive a second user-generated request that requests a change to the computer program; cause the AI model to make the change to the computer program, which results in a revised computer program, by providing a second AI prompt, which is generated from the second user-generated request, as a second input to the AI model, the second AI prompt requesting that the AI model make the change to the computer program; receive a second response to the second AI prompt from the AI model, the second response to the second AI prompt comprising the revised computer program; and trigger at least one of the following: presentation of a representation of the revised computer program to the user via the user interface; automatic execution of the revised computer program against the target code.

(A11) In the example system of any of A1-A10, wherein the computer-executable instructions are executable by the processor system to at least: trigger the automatic execution of the computer program against the target code; after the automatic execution of the computer program against the target code is triggered, receive a second user-generated request that requests a change to the target code; cause the AI model to make the change to the target code, which results in revised target code, using the semantic information about the target code, which is gathered by the compiler at the compile time of the target code, by providing a second AI prompt, which is generated from the second user-generated request, as a second input to the AI model, the second AI prompt requesting that the AI model make the change to the target code; receive a second response to the second AI prompt from the AI model, the second response to the second AI prompt comprising the revised target code; and confirm to the user that the change has been made to the target code.

(A12) In the example system of any of A1-A11, wherein the computer-executable instructions are executable by the processor system to at least: trigger the automatic execution of the computer program against the target code; after the automatic execution of the computer program against the target code is triggered, receive a second user-generated request that requests performance of an action with regard to the target code; convert the second user-generated request into a second AI prompt by formatting the second user-generated request to have the specified format that enables the AI model to generate a second computer program that, when executed, performs the action with regard to the target code; cause the AI model to generate the second computer program, which comprises configuring the second computer program to perform the action with regard to the target code at runtime of the computer program using the semantic information about the target code that is gathered by the compiler at the compile time of the target code and that is provided to the second computer program by a second API that is available to the second computer program at compile time of the second computer program, by providing the second AI prompt as a second input to the AI model, the second AI prompt requesting that the AI model generate the second computer program; receive a second response to the second AI prompt from the AI model, the second response to the second AI prompt comprising the second computer program; and trigger at least one of the following: presentation of a representation of the second computer program to the user via the user interface; automatic execution of the second computer program against the target code.

(A13) In the example system of any of A1-A12, wherein the computer-executable instructions are executable by the processor system to at least: after receipt of the response to the AI prompt from the AI model, determine that the computer program includes an error by analyzing the computer program; automatically generate a second AI prompt, which specifies the error and which requests that the AI model correct the computer program by removing the error; receive a second response from the AI model, the second response including a corrected version of the computer program in which the error is removed; and trigger at least one of the following: presentation of a representation of the corrected version of the computer program to the user via the user interface; automatic execution of the corrected version of the computer program against the target code.

(A14) In the example system of any of A1-A13, wherein the computer-executable instructions are executable by the processor system further to at least: after receipt of the response to the AI prompt from the AI model, determine that the computer program includes an error by analyzing the computer program; automatically generate a second AI prompt, which specifies the error and which requests that the AI model correct the computer program by removing the error; receive a second response to the second AI prompt from the AI model, the second response including an updated version of the computer program that includes the error, wherein at least one of the presentation of the representation of the computer program or the automatic execution of the computer program is triggered in response to receipt of the second response from the AI model; and provide a statement via the user interface, the statement indicating that the computer program includes the error.

(A15) In the example system of any of A1-A14, wherein the computer-executable instructions are executable by the processor system to at least: cause the AI model to generate the computer program by providing the AI prompt together with contextual information as inputs to the AI model, the contextual information comprising an initial portion of the computer program, wherein the initial portion of the computer program comprises context regarding the AI prompt; and wherein the response to the AI prompt comprises the computer program having the initial portion.

(A16) In the example system of any of A1-A15, wherein the computer-executable instructions are executable by the processor system to at least: cause the AI model to generate the computer program by providing the AI prompt together with contextual information as inputs to the AI model, the contextual information comprising a plurality of previous AI prompts that were previously provided as a plurality of respective inputs to the AI model and that requested that the AI model generate a plurality of respective computer programs, wherein the plurality of previous AI prompts comprises context regarding the AI prompt.

(A17) In the example system of any of A1-A16, wherein the computer-executable instructions are executable by the processor system to at least: detect an intent of the user from whom the user-generated request is received, the intent indicating that the user intends to use artificial intelligence to at least one of perform an action on the target code or obtain the information regarding the instance of the attribute in the target code; and wherein conversion of the user-generated request into the AI prompt is triggered by the intent of the user indicating that the user intends to use artificial intelligence to at least one of perform the action on the target code or obtain the information regarding the instance of the attribute in the target code.

(A18) In the example system of any of A1-A17, wherein the user-generated request further requests a change to the target code; and wherein the computer-executable instructions are executable by the processor system to at least: convert the user-generated request into the AI prompt by formatting the user-generated request to have the specified format that enables the AI model to generate the computer program that, when executed, determines the information regarding the instance of the attribute in the target code and makes the change to the target code; and cause the AI model to generate the computer program, which comprises configuring the computer program to determine, at the runtime of the computer program, the information regarding the instance of the attribute in the target code using the semantic information about the target code that is gathered by the compiler at the compile time of the target code and that is provided to the computer program by the API that is available to the computer program at the compile time of the computer program and to make the change to the target code, by providing the AI prompt as the input to the AI model.

(B1) An example method is implemented by a computing system (Figure 1, 102A-102M, 106A-106N; Figure 9, 900; Figure 10, 1002; Figure 11, 1100). The method comprises receiving (Figure 2, 202) a user-generated request (Figure 9, 930) that requests information regarding an instance of an attribute in target code (Figure 9, 972). The method further comprises converting (Figure 2, 204) the user-generated request into an AI prompt (Figure 9, 942) by formatting the user-generated request to have a specified format that enables an AI model (Figure 9, 918) to generate a computer program (Figure 9, 948) that, when executed, determines the information regarding the instance of the attribute in the target code. The method further comprises causing (Figure 2, 206) the AI model to generate the computer program, which comprises configuring (Figure 2, 208) the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. The method further comprises receiving (Figure 2, 210) a response (Figure 9, 946) to the AI prompt from the AI model. The response to the AI prompt comprises the computer program. The method further comprises triggering (Figure 2, 212) at least one of the following: presentation of a representation (Figure 9, 964) of the computer program to a user via a user interface; automatic execution (Figure 9, 966) of the computer program against the target code.

(B2) In the example method of B1, wherein triggering the automatic execution of the computer program comprises: increasing efficiency of the computing system by triggering the automatic execution of the computer program against the target code.

(B3) In the example method of any of B1-B2, wherein triggering the automatic execution of the computer program comprises: reducing an amount of resources consumed by the computing system to determine the information regarding the instance of the attribute in the target code by triggering the automatic execution of the computer program against the target code.

(B4) In the example method of any of B1-B3, wherein causing the AI model to generate the computer program comprises: causing the AI model to generate at least a portion of the computer program in a general-purpose programming language.

(B5) In the example method of any of B1-B4, wherein causing the AI model to generate the computer program comprises: causing the AI model to generate at least a portion of the computer program in a domain-specific programming language.

(B6) In the example method of any of B1-B5, wherein causing the AI model to generate the computer program comprises: causing the AI model to generate the computer program and metadata associated with the computer program by providing the AI prompt as the input to the AI model, the metadata including second information that the computer program uses to determine the information regarding the instance of the attribute in the target code; and wherein the response to the AI prompt comprises the computer program and the metadata.

(B7) In the example method of any of B1-B6, further comprising: providing the AI prompt and an inquiry, asking whether a change is to be made to the AI prompt, to a user via a user interface; and receiving a response to the inquiry, indicating that the change is to be made to the AI prompt, via the user interface; wherein causing the AI model to generate the computer program comprises: providing the AI prompt, which includes the change, as the input to the AI model.

(B8) In the example method of any of B1-B7, wherein causing the AI model to generate the computer program comprises: providing the AI prompt together with contextual information as inputs to the AI model, the contextual information comprising at least a portion of a definition of the API that is available to the computer program at the compile time of the computer program, wherein the portion of the definition of the API comprises context regarding the AI prompt.

(B9) In the example method of any of B1-B8, wherein causing the AI model to generate the computer program comprises: providing the AI prompt together with contextual information as inputs to the AI model, the contextual information comprising sample code, which is written in a programming language in which the computer program is to be written, wherein the sample code comprises context regarding the AI prompt.

(B10) In the example method of any of B1-B9, comprising: triggering the presentation of the representation of the computer program to the user via the user interface; wherein the method further comprises: after the presentation of the representation of the computer program to the user via the user interface is triggered, receiving a second user-generated request that requests a change to the computer program; causing the AI model to make the change to the computer program, which results in a revised computer program, by providing a second AI prompt, which is generated from the second user-generated request, as a second input to the AI model, the second AI prompt requesting that the AI model make the change to the computer program; receiving a second response to the second AI prompt from the AI model, the second response to the second AI prompt comprising the revised computer program; and triggering at least one of the following: presentation of a representation of the revised computer program to the user via the user interface; automatic execution of the revised computer program against the target code.

(B11) In the example method of any of B1-B10, comprising: triggering the automatic execution of the computer program against the target code; wherein the method further comprises: after the automatic execution of the computer program against the target code is triggered, receiving a second user-generated request that requests a change to the target code; causing the AI model to make the change to the target code, which results in revised target code, using the semantic information about the target code, which is gathered by the compiler at the compile time of the target code, by providing a second AI prompt, which is generated from the second user-generated request, as a second input to the AI model, the second AI prompt requesting that the AI model make the change to the target code; receiving a second response to the second AI prompt from the AI model, the second response to the second AI prompt comprising the revised target code; and confirming to the user that the change has been made to the target code.

(B12) In the example method of any of B1-B11, comprising: triggering the automatic execution of the computer program against the target code; wherein the method further comprises: after the automatic execution of the computer program against the target code is triggered, receiving a second user-generated request that requests performance of an action with regard to the target code; converting the second user-generated request into a second AI prompt by formatting the second user-generated request to have the specified format that enables the AI model to generate a second computer program that, when executed, performs the action with regard to the target code; causing the AI model to generate the second computer program, which comprises configuring the second computer program to perform the action with regard to the target code at runtime of the computer program using the semantic information about the target code that is gathered by the compiler at the compile time of the target code and that is provided to the second computer program by a second API that is available to the second computer program at compile time of the second computer program, by providing the second AI prompt as a second input to the AI model, the second AI prompt requesting that the AI model generate the second computer program; receiving a second response to the second AI prompt from the AI model, the second response to the second AI prompt comprising the second computer program; and triggering at least one of the following: presentation of a representation of the second computer program to the user via the user interface; automatic execution of the second computer program against the target code.

(B13) In the example method of any of B1-B12, further comprising: after receipt of the response to the AI prompt from the AI model, determining that the computer program includes an error by analyzing the computer program; automatically generating a second AI prompt, which specifies the error and which requests that the AI model correct the computer program by removing the error; and receiving a second response from the AI model, the second response including a corrected version of the computer program in which the error is removed; wherein triggering at least one of the presentation of the representation of the computer program or the automatic execution of the computer program comprises: triggering at least one of the following: presentation of a representation of the corrected version of the computer program to the user via the user interface; automatic execution of the corrected version of the computer program against the target code.

(B14) In the example method of any of B 1-B 13, further comprising: after receipt of the response to the AI prompt from the AI model, determining that the computer program includes an error by analyzing the computer program; automatically generating a second AI prompt, which specifies the error and which requests that the AI model correct the computer program by removing the error; receiving a second response to the second AI prompt from the AI model, the second response including an updated version of the computer program that includes the error, wherein triggering at least one of the presentation of the representation of the computer program or the automatic execution of the computer program is performed in response to receipt of the second response from the AI model; and providing a statement via the user interface, the statement indicating that the computer program includes the error.

(B15) In the example method of any of B1-B 14, wherein causing the AI model to generate the computer program comprises: providing the AI prompt together with contextual information as inputs to the AI model, the contextual information comprising an initial portion of the computer program, wherein the initial portion of the computer program comprises context regarding the AI prompt; and wherein the response to the AI prompt comprises the computer program having the initial portion.

(B16) In the example method of any of B1-B 15, wherein causing the AI model to generate the computer program comprises: providing the AI prompt together with contextual information as inputs to the AI model, the contextual information comprising a plurality of previous AI prompts that were previously provided as a plurality of respective inputs to the AI model and that requested that the AI model generate a plurality of respective computer programs, wherein the plurality of previous AI prompts comprises context regarding the AI prompt.

(B17) In the example method of any of B1-B 16, further comprising: detecting an intent of the user from whom the user-generated request is received, the intent indicating that the user intends to use artificial intelligence to at least one of perform an action on the target code or obtain the information regarding the instance of the attribute in the target code; wherein converting the user-generated request into the AI prompt is triggered by the intent of the user indicating that the user intends to use artificial intelligence to at least one of perform the action on the target code or obtain the information regarding the instance of the attribute in the target code.

(B18) In the example method of any of B1-B 17, wherein the user-generated request further requests a change to the target code; wherein converting the user-generated request into the AI prompt comprises: formatting the user-generated request to have the specified format that enables the AI model to generate the computer program that, when executed, determines the information regarding the instance of the attribute in the target code and makes the change to the target code; and wherein causing the AI model to generate the computer program comprises: causing the AI model to configure the computer program to determine, at the runtime of the computer program, the information regarding the instance of the attribute in the target code using the semantic information about the target code that is gathered by the compiler at the compile time of the target code and that is provided to the computer program by the API that is available to the computer program at the compile time of the computer program and to further configure the computer program to make the change to the target code by providing the AI prompt as the input to the AI model.

(C1) An example computer program product (Figure 10, 1024; Figure 11, 1118, 1122) comprises a computer-readable storage medium having instructions recorded thereon for enabling a processor-based system (Figure 1, 102A-102M, 106A-106N; Figure 9, 900; Figure 10, 1002; Figure 11, 1100) to perform operations. The operations comprise receiving (Figure 2, 202) a user-generated request (Figure 9, 930) that requests information regarding an instance of an attribute in target code (Figure 9, 972). The operations further comprise converting (Figure 2, 204) the user-generated request into an AI prompt (Figure 9, 942) by formatting the user-generated request to have a specified format that enables an AI model (Figure 9, 918) to generate a computer program (Figure 9, 948) that, when executed, determines the information regarding the instance of the attribute in the target code. The operations further comprise causing (Figure 2, 206) the AI model to generate the computer program, which comprises configuring (Figure 2, 208) the computer program to determine, at runtime of the computer program, the information regarding the instance of the attribute in the target code using semantic information about the target code that is gathered by a compiler at compile time of the target code and that is provided to the computer program by an application programming interface (API) that is available to the computer program at compile time of the computer program, by providing the AI prompt as an input to the AI model. The AI prompt requests that the AI model generate the computer program. The operations further comprise receiving (Figure 2, 210) a response (Figure 9, 946) to the AI prompt from the AI model. The response to the AI prompt comprises the computer program. The operations further comprise triggering (Figure 2, 212) at least one of the following: presentation of a representation (Figure 9, 964) of the computer program to a user via a user interface; automatic execution (Figure 9, 966) of the computer program against the target code.

### III. Example Computer System

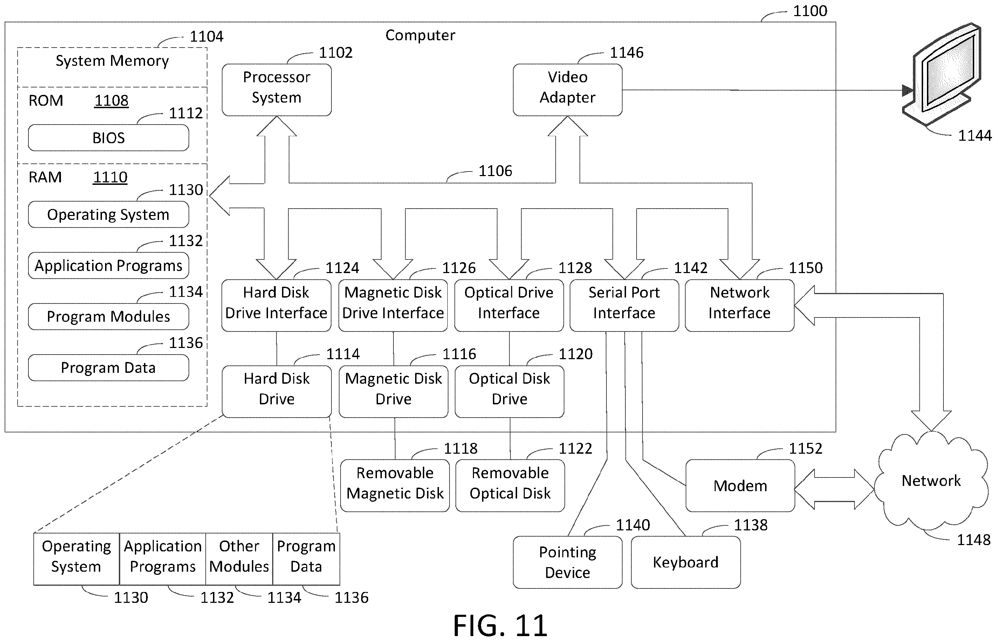

FIG. 11 depicts an example computer 1100 in which embodiments may be implemented. Any one or more of the user devices 102A-102M and/or any one or more of the servers 106A-106N shown in FIG. 1 and/or the computing system 900 shown in FIG. 9 may be implemented using computer 1100, including one or more features of computer 1100 and/or alternative features. Computer 1100 may be a general-purpose computing device in the form of a conventional personal computer, a mobile computer, or a workstation, for example, or computer 1100 may be a special purpose computing device. The description of computer 1100 provided herein is provided for purposes of illustration, and is not intended to be limiting. Embodiments may be implemented in further types of computer systems, as would be known to persons skilled in the relevant art(s).

As shown in FIG. 11, computer 1100 includes a processor system 1102, a system memory 1104, and a bus 1106 that couples various system components including system memory 1104 to processor system 1102. Bus 1106 represents one or more of any of several types of bus structures, including a memory bus or memory controller, a peripheral bus, an accelerated graphics port, and a processor or local bus using any of a variety of bus architectures. System memory 1104 includes read only memory (ROM) 1108 and random access memory (RAM) 1110. A basic input/output system 1112 (BIOS) is stored in ROM 1108.

Computer 1100 also has one or more of the following drives: a hard disk drive 1114 for reading from and writing to a hard disk, a magnetic disk drive 1116 for reading from or writing to a removable magnetic disk 1118, and an optical disk drive 1120 for reading from or writing to a removable optical disk 1122 such as a CD ROM, DVD ROM, or other optical media. Hard disk drive 1114, magnetic disk drive 1116, and optical disk drive 1120 are connected to bus 1106 by a hard disk drive interface 1124, a magnetic disk drive interface 1126, and an optical drive interface 1128, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 1130, one or more application programs 1132, other program modules 1134, and program data 1136. Application programs 1132 or program modules 1134 may include, for example, computer program logic for implementing any one or more of (e.g., at least a portion of) the AI-based compiler-assisted program generation logic 108, the AI-based compiler-assisted program generation logic 908, the intent detection logic 912, the request conversion logic 914, the control logic 916, the AI model 918, the trigger logic 920, the model training logic 922, the second control logic 924, the confirmation logic 926, the program analysis logic 928, flowchart 200 (including any step of flowchart 200), flowchart 300 (including any step of flowchart 300), flowchart 400 (including any step of flowchart 400), flowchart 500 (including any step of flowchart 500), flowchart 600 (including any step of flowchart 600), flowchart 700 (including any step of flowchart 700), and/or flowchart 800 (including any step of flowchart 800), as described herein.

A user may enter commands and information into the computer 1100 through input devices such as keyboard 1138 and pointing device 1140. Other input devices (not shown) may include a microphone, joystick, game pad, satellite dish, scanner, touch screen, camera, accelerometer, gyroscope, or the like. These and other input devices are often connected to the processor system 1102 through a serial port interface 1142 that is coupled to bus 1106, but may be connected by other interfaces, such as a parallel port, game port, or a universal serial bus (USB).

A display device 1144 (e.g., a monitor) is also connected to bus 1106 via an interface, such as a video adapter 1146. In addition to display device 1144, computer 1100 may include other peripheral output devices (not shown) such as speakers and printers.

Computer 1100 is connected to a network 1148 (e.g., the Internet) through a network interface or adapter 1150, a modem 1152, or other means for establishing communications over the network. Modem 1152, which may be internal or external, is connected to bus 1106 via serial port interface 1142.

As used herein, the terms "computer program medium" and "computer-readable storage medium" are used to generally refer to media (e.g., non-transitory media) such as the hard disk associated with hard disk drive 1114, removable magnetic disk 1118, removable optical disk 1122, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 1132 and other program modules 1134) may be stored on the hard disk, magnetic disk, optical disk, ROM, or RAM. Such computer programs may also be received via network interface 1150 or serial port interface 1142. Such computer programs, when executed or loaded by an application, enable computer 1100 to implement features of embodiments discussed herein. Accordingly, such computer programs represent controllers of the computer 1100.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 900, 1002, 1100) comprising:
a processor system (1010, 1102); and
a memory (1020, 1022, 1024, 1104, 1108, 1110) that stores computer-executable instructions that are executable by the processor system (1010, 1102) to at least:
receive (202) a user-generated request (930) that requests information regarding an instance of an attribute in target code (972);
convert (204) the user-generated request (930) into an AI prompt (942) by formatting the user-generated request (930) to have a specified format that enables an AI model (918) to generate a computer program (948) that, when executed, determines the information regarding the instance of the attribute in the target code (972);
cause (206) the AI model (918) to generate the computer program (948), which comprises configuring (208) the computer program (948) to determine, at runtime of the computer program (948), the information regarding the instance of the attribute in the target code (972) using semantic information about the target code (972) that is gathered by a compiler at compile time of the target code (972) and that is provided to the computer program (948) by an application programming interface (API) that is available to the computer program (948) at compile time of the computer program (948), by providing the AI prompt (942) as an input to the AI model (918), the AI prompt (942) requesting that the AI model (918) generate the computer program (948);
receive (210) a response (946) to the AI prompt (942) from the AI model (918), the response (946) to the AI prompt (942) comprising the computer program (948); and
trigger (212) at least one of the following:
presentation of a representation (964) of the computer program (948) to a user via a user interface;
automatic execution (966) of the computer program (948) against the target code (972).

2. The system of claim 1, wherein the computer-executable instructions are executable by the processor system to at least perform one or more of:
increase efficiency of the computing system by triggering the automatic execution of the computer program against the target code;
reduce an amount of resources consumed by the computing system to determine the information regarding the instance of the attribute in the target code by triggering the automatic execution of the computer program against the target code;
cause the AI model to generate at least a portion of the computer program in a general-purpose programming language; and
cause the AI model to generate at least a portion of the computer program in a domain-specific programming language.

3. The system of claims 1 or 2, wherein the computer-executable instructions are executable by the processor system to at least:
cause the AI model to generate the computer program and metadata associated with the computer program by providing the AI prompt as the input to the AI model, the metadata including second information that the computer program uses to determine the information regarding the instance of the attribute in the target code; and
wherein the response to the AI prompt comprises the computer program and the metadata.

4. The system of any preceding claim, wherein the computer-executable instructions are executable by the processor system to at least:
provide the AI prompt and an inquiry, asking whether a change is to be made to the AI prompt, to a user via a user interface;
receive a response to the inquiry, indicating that the change is to be made to the AI prompt, via the user interface; and
cause the AI model to generate the computer program by providing the AI prompt, which includes the change, as the input to the AI model.

5. The system of any preceding claim, wherein the computer-executable instructions are executable by the processor system to at least:
after receipt of the response to the AI prompt from the AI model, determine that the computer program includes an error by analyzing the computer program;
automatically generate a second AI prompt, which specifies the error and which requests that the AI model correct the computer program by removing the error;
receive a second response from the AI model, the second response including a corrected version of the computer program in which the error is removed; and
trigger at least one of the following:
presentation of a representation of the corrected version of the computer program to the user via the user interface;
automatic execution of the corrected version of the computer program against the target code.

6. The system of any preceding claim, wherein the computer-executable instructions are executable by the processor system to at least:
detect an intent of the user from whom the user-generated request is received, the intent indicating that the user intends to use artificial intelligence to at least one of perform an action on the target code or obtain the information regarding the instance of the attribute in the target code; and
wherein conversion of the user-generated request into the AI prompt is triggered by the intent of the user indicating that the user intends to use artificial intelligence to at least one of perform the action on the target code or obtain the information regarding the instance of the attribute in the target code.

7. The system of any preceding claim, wherein the user-generated request further requests a change to the target code; and
wherein the computer-executable instructions are executable by the processor system to at least:
convert the user-generated request into the AI prompt by formatting the user-generated request to have the specified format that enables the AI model to generate the computer program that, when executed, determines the information regarding the instance of the attribute in the target code and makes the change to the target code; and
cause the AI model to generate the computer program, which comprises configuring the computer program to determine, at the runtime of the computer program, the information regarding the instance of the attribute in the target code using the semantic information about the target code that is gathered by the compiler at the compile time of the target code and that is provided to the computer program by the API that is available to the computer program at the compile time of the computer program and to make the change to the target code, by providing the AI prompt as the input to the AI model.

8. A method implemented by a computing system (102A-102M, 106A-106N, 900, 1002, 1100), the method comprising:
receiving (202) a user-generated request (930) that requests information regarding an instance of an attribute in target code (972);
converting (204) the user-generated request (930) into an AI prompt (942) by formatting the user-generated request (930) to have a specified format that enables an AI model (918) to generate a computer program (948) that, when executed, determines the information regarding the instance of the attribute in the target code (972);
causing (206) the AI model (918) to generate the computer program (948), which comprises configuring (208) the computer program (948) to determine, at runtime of the computer program (948), the information regarding the instance of the attribute in the target code (972) using semantic information about the target code (972) that is gathered by a compiler at compile time of the target code (972) and that is provided to the computer program (948) by an application programming interface (API) that is available to the computer program (948) at compile time of the computer program (948), by providing the AI prompt (942) as an input to the AI model (918), the AI prompt (942) requesting that the AI model (918) generate the computer program (948);
receiving (210) a response (946) to the AI prompt (942) from the AI model (918), the response (946) to the AI prompt (942) comprising the computer program (948); and
triggering (212) at least one of the following:
presentation of a representation of the computer program (948) to a user via a user interface;
automatic execution of the computer program (948) against the target code (972).

9. The method of claim 8, wherein causing the AI model to generate the computer program comprises:
providing the AI prompt together with contextual information as inputs to the AI model, the contextual information comprising at least a portion of a definition of the API that is available to the computer program at the compile time of the computer program, wherein the portion of the definition of the API comprises context regarding the AI prompt; or
providing the AI prompt together with contextual information as inputs to the AI model, the contextual information comprising sample code, which is written in a programming language in which the computer program is to be written, wherein the sample code comprises context regarding the AI prompt.

10. The method of claims 8 or 9, comprising:
triggering the presentation of the representation of the computer program to the user via the user interface;
wherein the method further comprises:
after the presentation of the representation of the computer program to the user via the user interface is triggered, receiving a second user-generated request that requests a change to the computer program;
causing the AI model to make the change to the computer program, which results in a revised computer program, by providing a second AI prompt, which is generated from the second user-generated request, as a second input to the AI model, the second AI prompt requesting that the AI model make the change to the computer program;
receiving a second response to the second AI prompt from the AI model, the second response to the second AI prompt comprising the revised computer program; and
triggering at least one of the following:
presentation of a representation of the revised computer program to the user via the user interface;
automatic execution of the revised computer program against the target code.

11. The method of any of claims 8 to 10, comprising:
triggering the automatic execution of the computer program against the target code;
wherein the method further comprises:
after the automatic execution of the computer program against the target code is triggered, receiving a second user-generated request that requests a change to the target code;
causing the AI model to make the change to the target code, which results in revised target code, using the semantic information about the target code, which is gathered by the compiler at the compile time of the target code, by providing a second AI prompt, which is generated from the second user-generated request, as a second input to the AI model, the second AI prompt requesting that the AI model make the change to the target code;
receiving a second response to the second AI prompt from the AI model, the second response to the second AI prompt comprising the revised target code; and
confirming to the user that the change has been made to the target code.

12. The method of any of claims 8 to 11, comprising:
triggering the automatic execution of the computer program against the target code;
wherein the method further comprises:
after the automatic execution of the computer program against the target code is triggered, receiving a second user-generated request that requests performance of an action with regard to the target code;
converting the second user-generated request into a second AI prompt by formatting the second user-generated request to have the specified format that enables the AI model to generate a second computer program that, when executed, performs the action with regard to the target code;
causing the AI model to generate the second computer program, which comprises configuring the second computer program to perform the action with regard to the target code at runtime of the computer program using the semantic information about the target code that is gathered by the compiler at the compile time of the target code and that is provided to the second computer program by a second API that is available to the second computer program at compile time of the second computer program, by providing the second AI prompt as a second input to the AI model, the second AI prompt requesting that the AI model generate the second computer program;
receiving a second response to the second AI prompt from the AI model, the second response to the second AI prompt comprising the second computer program; and
triggering at least one of the following:
presentation of a representation of the second computer program to the user via the user interface;
automatic execution of the second computer program against the target code.

13. The method of any of claims 8 to 12, further comprising:
after receipt of the response to the AI prompt from the AI model, determining that the computer program includes an error by analyzing the computer program;
automatically generating a second AI prompt, which specifies the error and which requests that the AI model correct the computer program by removing the error;
receiving a second response to the second AI prompt from the AI model, the second response including an updated version of the computer program that includes the error, wherein triggering at least one of the presentation of the representation of the computer program or the automatic execution of the computer program is performed in response to receipt of the second response from the AI model; and
providing a statement via the user interface, the statement indicating that the computer program includes the error.

14. The method of any of claims 8 to 13, wherein causing the AI model to generate the computer program comprises:
providing the AI prompt together with contextual information as inputs to the AI model, the contextual information comprising an initial portion of the computer program, wherein the initial portion of the computer program comprises context regarding the AI prompt; and wherein the response to the AI prompt comprises the computer program having the initial portion; or
providing the AI prompt together with contextual information as inputs to the AI model, the contextual information comprising a plurality of previous AI prompts that were previously provided as a plurality of respective inputs to the AI model and that requested that the AI model generate a plurality of respective computer programs, wherein the plurality of previous AI prompts comprises context regarding the AI prompt.

15. A computer program product (1024, 1118, 1122) comprising a computer-readable storage medium having instructions recorded thereon for enabling a processor-based system (102A-102M, 106A-106N, 900, 1002, 1100) to perform operations, the operations comprising:
receiving (202) a user-generated request (930) that requests information regarding an instance of an attribute in target code (972);
converting (204) the user-generated request (930) into an AI prompt (942) by formatting the user-generated request (930) to have a specified format that enables an AI model (918) to generate a computer program (948) that, when executed, determines the information regarding the instance of the attribute in the target code (972);
causing (206) the AI model (918) to generate the computer program (948), which comprises configuring (208) the computer program (948) to determine, at runtime of the computer program (948), the information regarding the instance of the attribute in the target code (972) using semantic information about the target code (972) that is gathered by a compiler at compile time of the target code (972) and that is provided to the computer program (948) by an application programming interface (API) that is available to the computer program (948) at compile time of the computer program (948), by providing the AI prompt (942) as an input to the AI model (918), the AI prompt (942) requesting that the AI model (918) generate the computer program (948);
receiving (210) a response (946) to the AI prompt (942) from the AI model (918), the response (946) to the AI prompt (942) comprising the computer program (948); and
triggering (212) at least one of the following:
presentation of a representation of the computer program (948) to a user via a user interface;
automatic execution of the computer program (948) against the target code (972).
